# EUROPÄISCHE PATENTSCHRIFT

(11) **EP 2 012 205 B1**
(45) Veröffentlichungstag und Bekanntmachung des Hinweises auf die Patenterteilung: **13.04.2016**
(21) Anmeldenummer: 08158545.7
(22) Anmeldetag: 19.06.2008
(51) Int. Cl.: G05B 19/408

(54) **Vorrichtung und Verfahren zum Generieren einer Bedienoberflächenkonfiguration für ein Feldgerät**
Device and method for generating a user interface configuration for a field device
Dispositif et procédé de generation d'une configuration d'interface utilisateur destiné à un dispositif de terrain

(30) Priorität: 25.06.2007 DE 102007029136; 25.06.2007 US 945987 P
(43) Veröffentlichungstag der Anmeldung: 07.01.2009
(73) Patentinhaber: VEGA Grieshaber KG, 77709 Wolfach (DE)
(72) Erfinder: Isenmann, Andreas, 77716 Haslach (DE); Faist, Fridolin, 77709 Oberwolfach (DE)
(74) Vertreter: Kopf, Korbinian Paul

(56) Entgegenhaltungen:
- WO-A1-2005/109122
- DE-A1- 10 151 119
- DE-A1- 10 243 781
- DE-A1- 10 253 603
- DE-A1-102005 014 050
- US-A1- 2004 230 899
- US-A1- 2006 229 738

## Beschreibung

Die vorliegende Erfindung betrifft das Gebiet der Messtechnik. Insbesondere betrifft die vorliegende Erfindung eine Vorrichtung zum Generieren einer Bedienoberflächenkonfiguration für ein Feldgerät, eine Vorrichtung zum Interpretieren einer Bedienoberflächenbeschreibungsdatei, ein Verfahren zum Generieren einer Bedienoberflächenkonfiguration für ein Feldgerät, ein computerlesbares Speichermedium mit einem Programm zum Generieren einer Bedienoberflächenkonfiguration für ein Feldgerät, ein Programm-Element zum Generieren einer Bedienoberflächenkonfiguration für ein Feldgerät, ein Verfahren zum Interpretieren einer Bedienoberflächenbeschreibungsdatei, ein computerlesbares Speichermedium mit einem Programm zum Interpretieren einer Bedienoberflächenbeschreibungsdatei und ein Programm-Element zum Interpretieren einer Bedienoberflächenbeschreibungsdatei.

Messgeräte, insbesondere ein Feldgerät, welches als ein Aktor oder ein Sensor ausgebildet sein mag, oder ein Auswertegerät, weisen in der Regel zur Bedienung eigene Bedienoberflächen auf. Diese Bedienoberflächen weisen oft eine Anzeigeeinrichtung in der Form einer LCD Anzeige (Liquid Crystal Display) und eine Vielzahl von Tastern oder Schaltern auf. Mittels einer Bedienoberfläche, welche als Mensch-Maschine-Schnittstelle dient oder mittels einer Ein-/Ausgabegabeeinrichtung, ermöglicht das Feldgerät einem Nutzer, Bediener oder Anwender, das Feldgerät zu bedienen, zu konfigurieren oder zu parametrieren.

Bei der industriellen Fertigung in einem Produktionsbetrieb, bei der an verschiedenen Stellen im Produktionsablauf ein Sensor abgefragt oder ein Aktor eingestellt werden muss, kann es erforderlich sein, eine Vielzahl von Auswertegeräten oder Feldgeräten verteilt über den Produktionsbetrieb einzusetzen. Die Bedienung dieser Vielzahl an Messeinrichtungen kann sich jedoch als schwierig erweisen, da eine Bedienung mit den von der Messeinrichtung bereitgestellten Bedienoberfläche oft nur lokal an der Messeinrichtung erfolgen kann.

Um eine lokale Bedienung zu vermeiden, kommt in großen Produktionsstätten eine zentrale Warte zum Einsatz, von der aus eine Messeinrichtung oder ein Feldgerät gesteuert werden kann, welches sich an einem entfernten Einsatzort befindet. Ebenso kann ein Messwert, der von der entfernten Messeinrichtung erzeugt wird, in der zentralen Warte angezeigt werden.

Um eine Vielzahl von Feldgeräten von einer zentralen Warte aus zu bedienen, wurden Bedientools oder Bedienwerkzeuge entwickelt, die unter einer gemeinsamen Bedienoberfläche den Zugriff auf die unterschiedlichen Feldgeräte ermöglichen. Die Bedientools stellen eine Architektur, einen Rahmen oder einen Frame zur Verfügung, der beispielsweise für ein einheitliches Erscheinungsbild von Anzeigen und Bedienelementen von Feldgeräten sorgt. Durch das einheitliche Erscheinungsbild kann die Bedienung der Feldgeräte vereinfacht werden.

Zur Integration eines Feldgerätes in ein Bedientool ist eine Beschreibung der Bedienoberfläche des jeweiligen Feldgeräts nötig. Die Bedienoberfläche wird für jedes Feldgerät individuell erstellt. In der Bedienoberfläche sind Geräteparameter, d.h. die Gerätebeschreibung in einer Beschreibungssprache beschrieben, so dass die Parameter von dem Bedientool interpretiert werden können. Weil die Beschreibungssprache für die jeweilige Bedientoolarchitektur standardisiert ist, ist es möglich, die Bedienung von Feldgeräten unterschiedlicher Hersteller unter dem gemeinsamen Bedientool zusammenzuführen.

Das gemeinsame Bedientool kann mit einem übergreifenden Umbrella-Managementsystem verglichen werden, das eine Bedienung der Feldgeräte unabhängig von dem Feldgerätehersteller ermöglicht. Das übergreifende Managementsystem oder Bedientool kann genutzt werden, um beispielsweise eine Verbindung zwischen einzelnen Sensoren untereinander darzustellen, und einen Überblick über eine Verteilung der Feldgeräte innerhalb des Produktionsbetriebes zu ermöglichen. Beispiele für Bedientools sind Emerson AMS, SIMATIC PDM oder PACTware™.

Zur Integration von Feldgeräten unterschiedlicher Hersteller in das Bedientool wird von dem jeweiligen Hersteller des Feldgeräts eine für das entsprechende Feldgerät angepasste Bedienoberfläche bereitgestellt. Als Architektur für die Bedientools haben sich unterschiedliche Technologien oder Technologiekonzepte etabliert, denen bei der Erstellung von Bedienoberflächen für das jeweilige Bedientool mittels der Beschreibungssprachen Rechnung getragen werden muss. Die Verfügbarkeit einer Bedienoberfläche für das bei einem Anwender vorhandene Bedientool kann für die Kaufentscheidung über ein Feldgerät von Bedeutung sein.

Beispielsweise gibt es das Field Device Tool (FDT) System mit Device Type Managern (DTM). Die FDT Technologie stellt eine Reihe von definierten Schnittstellen zur Verfügung, über die eine FDT Rahmenapplikation (z.Bsp. PACTware™) mit den integrierten DTMs der Gerätehersteller kommunizieren kann. Diese Schnittstellen basieren auf der Microsoft^{®} COM - Technologie (Component Object Model) und ermöglichen den Geräteherstellern eine freie Nutzung sämtlicher Windows - Bedienelemente zur Gestaltung der Bedienoberfläche des jeweiligen Feldgerätes. Ebenso ist es dem Gerätehersteller überlassen, welche Programmiersprache er zur Implementierung seiner Bedienoberfläche nutzt. Diese Programmiersprache kann beispielsweise C, C++ oder Visual Basic sein.

Ein anderes Konzept wird mittels des Electronic Device Description (EDD) Konzepts bzw. des Enhanced EDD (EEDD) Konzepts verfolgt. Für die Beschreibung der Bedienoberfläche existiert eine spezielle Beschreibungssprache, die sogenannte Device Description Langugage (DDL). Nur Elemente, die in dieser Beschreibungssprache zur Verfügung stehen, können zur Gestaltung der Bedienoberfläche verwendet werden.

Unabhängig von der gewählten Technologie dient die Gerätebeschreibung des Feldgeräts nach dem Einlesen in das zugehörige Bedientool der Darstellung des Feldgerätes in einer Bedienoberfläche innerhalb des Bedientools oder innerhalb der Bedientoolumgebung. Über die für das Feldgerät in dem Bedientool erzeugte Oberfläche kann das Feldgerät über das einheitliche Bedientool angesprochen werden.

Da es jedoch die beiden unterschiedlichen Technologieansätze ist es für die Hersteller von Feldgeräten nötig, für jedes Bedienoberflächenkonzept eine eigene Gerätebeschreibung für jedes einzelne Feldgerät zu entwickeln. Jede Technologie verfügt über unterschiedliche Entwicklungsumgebungen, die ihrerseits individuelle Gerätebeschreibungen erfordern. Ein Gerätehersteller wird dazu genötigt, mehrere Gerätebeschreibungen für das selbe Feldgerät bereitzustellen.

Ferner ist ein hoher Wartungsaufwand nötig, wenn in einem Feldgerät oder Gerät beispielsweise Funktionserweiterungen oder Erweiterungen der Parameter vorgenommen werden, da diese Änderungen auch in jede Bedienoberfläche eingebracht werden müssen.

Es gibt zwar Konvertierungstools, die automatisch eine auf Basis der EDD Technologie vorhandene Gerätebeschreibung in einen DTM auf Basis der FDT Technologie überführt. Jede Technologie bietet zur Gestaltung der Bedienoberfläche jedoch unterschiedliche Möglichkeiten. Bei der automatischen Konvertierung kann aber nur die gemeinsam verfügbare Funktionalität genutzt werden. Da die EDD und FDT/DTM Technologie Bedienoberflächenbeschreibungsdatei und ein Programm-Element zum Interpretieren einer Bedienoberflächenbeschreibungsdatei.

Die Erfindung ist entsprechend den angehängten Ansprüchen.

Gemäß einem Ausführungsbeispiel wird eine Vorrichtung zum Generieren oder Konfigurieren von zumindest einer Bedienoberflächenkonfiguration für zumindest ein Feldgerät bereitgestellt. Diese Vorrichtung zum Generieren von zumindest unterschiedliche Parameter oder Funktionen nutzen, kann nur die Schnittmenge der gemeinsam vorhandenen Parameter von der einen Gerätebeschreibungstechnologie in die andere Gerätebeschreibungstechnologie konvertiert werden. So kommt es beispielsweise vor, dass DTMs, die mittels Konvertierungstools generiert werden, die technischen Möglichkeiten der FDT Technologie nicht ausschöpfen können, da die Funktionen oder Parameter, nicht in der EDD Technologie vorhanden sind.

Aus der Druckschrift DE 102 43 781 ist eine elektronische Vorrichtung für ein Bussystem bekannt.

Die Druckschrift WO 2005/109122 beschreibt graphische Elemente mit multiplen Visualisierungen in einer Prozessumgebung. Die graphischen Elemente werden bereitgestellt für Komponenten einer graphischen Anzeige, um einen Anwender über eine Zustand einer Vorrichtung in einer Betriebsstätte zu informieren.

Das Dokument DE 102 53 603 A1 betrifft ein Verfahren zum Erzeugen von Softwaremodulen für Feldgeräte der Prozessautomatisierungstechnik, wobei aus Standard- bzw. internen Gerätebeschreibungen für Feldgeräte syntaktisch und semantisch korrekte Standard-Gerätebeschreibungen wie z. B. EDD oder GUIXML erzeugt und diese mittels eines Compilers in entsprechende Softwaremodule zur Bedienoberflächenkonfiguration umgewandelt werden. Eine Umwandlung aus internen Gerätebeschreibungen in Standard-Gerätebeschreibungen wie z. B. PDM DD, HCF DD wird auch offenbart.

Es ist eine Aufgabe der vorliegenden Erfindung, ein besseres Bereitstellen von einer Gerätebeschreibung eines Feldgerätes zu ermöglichen.

Dementsprechend wird eine Vorrichtung zum Generieren einer Bedienoberflächenkonfiguration für ein Feldgerät, eine Vorrichtung zum Interpretieren einer Bedienoberflächenbeschreibungsdatei, ein Verfahren zum Generieren einer Bedienoberflächenkonfiguration für ein Feldgerät, ein computerlesbares Speichermedium mit einem Programm zum Generieren einer Bedienoberflächenkonfiguration für ein Feldgerät, ein Programm-Element mit einem Programm zum Generieren einer Bedienoberflächenkonfiguration für ein Feldgerät angegeben, ein Verfahren zum Interpretieren einer Bedienoberflächenbeschreibungsdatei, ein computerlesbares Speichermedium mit einem Programm zum Interpretieren einer einer Bedienoberflächenkonfiguration oder der Bedienoberflächenkonfigurator weist eine Datenbank und zumindest eine Bedienoberflächengeneriereinrichtung auf. Die Vorrichtung kann auch zum Generieren einer Bedienoberflächenkonfiguration einer Vielzahl von Feldgeräten oder für mehrere Feldgeräte eingesetzt werden.

Die zumindest eine Bedienoberflächengeneriereinrichtung ist mit der Datenbank verbunden. Die Datenbank ist eingerichtet eine Vielzahl von Gerätedaten für das zumindest eine Feldgerät, insbesondere die Gerätedaten, Parameter oder Funktionen des zumindest einen Feldgeräts, zumindest eines Sensors oder zumindest eines Aktors abzuspeichern. Die zumindest eine Bedienoberflächengeneriereinrichtung ist eingerichtet, eine dem zumindest einem Feldgerät zugeordnete Bedienoberflächenbeschreibungsdatei in zumindest einer vorgebbaren Bedienoberflächenbeschreibungssprache zu generieren. Die Beschreibungssprache ist aus zumindest zwei unterschiedlichen Bedienoberflächenbeschreibungssprachen, beispielsweise FDT oder EDD, auswählbar oder vorgebbar.

Die Auswahl der Beschreibungssprache mag auch mittels der Auswahl einer Bedienoberflächengeneriereinrichtung erfolgen. Dazu mag die Vorrichtung zum Generieren oder Konfigurieren einer Bedienoberflächenkonfiguration eine Vielzahl von Bedienoberflächengeneriereinrichtungen aufweisen. Bei der Datenbank mag es sich auch um eine verteilte Datenbank handeln.

Mittels zumindest einer Auswahleinrichtung mag es möglich sein, zumindest ein Feldgerät aus der Datenbank auszuwählen, für welches die Bedienoberflächenkonfiguration generiert, konfiguriert oder erzeugt werden soll. Mittels einer solchen Auswahleinrichtung mag eine Auswahl zwischen mehreren in einer Datenbank vorhandenen Gerätebeschreibungen getroffen werden können.

Die Bedienoberfläche mag als grafische Repräsentation angesehen werden, die die Eingabeparameter oder die Ausgabewerte eines zugehörigen Feldgeräts in einem Bedientool darstellt. Damit mag sich ein Feldgerät von einer entfernten Warte aus bedienen lassen.

Gemäß einem weiteren Ausführungsbeispiel wird eine Vorrichtung zum Interpretieren einer Bedienoberflächenbeschreibungsdatei bereitgestellt. Die Vorrichtung weist eine Eingangsschnittstelle, eine Interpretiereinrichtung und eine Ausgangsschnittstelle auf. Die Eingangsschnittstelle ist eingerichtet eine Bedienoberflächenbeschreibugsdatei in einer ersten Bedienoberflächenbeschreibungssprache zu empfangen und an die Interpretiereinrichtung weiterzuleiten. Die Interpretiereinrichtung ist eingerichtet, die Bedienoberflächenbeschreibungsdatei in eine zweite Bedienoberflächenbeschreibungssprache umzuwandeln und an der Ausgangsschnittstelle bereitzustellen.

In der Interpretiereinrichtung mag die erste Beschreibungssprache unabhängig von der zweiten Beschreibungssprache aus einer Vielzahl von oder zumindest aus zwei Beschreibungssprachen wählbar sein. Mittels des Wandels der ersten Sprache in die zweite Sprache mag es möglich sein, flexibel eine verfügbare Bedienoberflächenbeschreibungsdatei in einem Bedientool zu verwenden.

Gemäß einem anderen Ausführungsbeispiel wird ein Verfahren zum Generieren oder Konfigurieren von zumindest einer Bedienoberflächenkonfiguration für zumindest ein Feldgerät angegeben, bei dem zumindest ein Feldgerät ausgewählt wird, für welches die Bedienoberflächenkonfiguration generiert werden soll. Es wird zumindest eine Bedienoberflächenbeschreibungssprache vorgegeben, in welcher die zumindest eine Bedienoberflächenkonfiguration generiert werden soll. Für das ausgewählte zumindest eine Feldgerät wird in der ausgewählten zumindest einen Bedienoberflächenbeschreibungssprache aus der vorhandenen Vielzahl von zugehörigen Gerätedaten, welche in einer Datenbank Feldgerät wird in der ausgewählten zumindest einen Bedienoberflächenbeschreibungssprache aus der vorhandenen Vielzahl von zugehörigen Gerätedaten, welche in einer Datenbank gespeichert sind, zumindest eine Bedienoberflächenbeschreibungsdatei generiert. Diese zumindest eine Bedienoberflächenbeschreibungsdatei ist für das zumindest eine Feldgerät angepasst und sie ist ebenfalls für zumindest ein Bedientool angepasst. Die zumindest eine vorgebbare Bedienoberflächenbeschreibungssprache ist aus zumindest zwei unterschiedlichen Bedienoberflächenbeschreibungssprachen auswählbar. In anderen Worten, mag das Vorgeben der zumindest einen Bedienoberflächenbeschreibungssprache mittels dem Auswählen einer Bedienoberflächenbeschreibungssprache aus zumindest zwei Bedienoberflächenbeschreibungssprachen erfolgen.

Die zumindest eine Bedienoberflächenbeschreibungsdatei mag eine Bedienoberflächenkonfiguration darstellen. Falls nur eine Gerätebeschreibung für ein einziges Feldgerät in der Datenbank gespeichert ist, mag das Auswählen des Feldgeräts vor dem Generieren der Bedienoberflächenkonfiguration entfallen.

Gemäß noch einem anderen Ausführungsbeispiel wird ein computerlesbares Speichermedium geschaffen, in dem ein Programm zum Generieren einer Bedienoberflächenkonfiguration für ein Feldgerät gemäß dem oben angegebenen Verfahren gespeichert ist. Dieses Programm führt, wenn es von einem Prozessor ausgeführt wird, das Auswählen von zumindest einem Feldgerät und Vorgeben von zumindest einer Bedienoberflächenbeschreibungssprache aus. Danach wird zumindest eine dem zumindest einem Feldgerät zugeordnete Bedienoberflächenbeschreibungsdatei in der vorgegebenen Bedienoberflächenbeschreibungssprache aus einer Vielzahl von Gerätedaten oder einer Vielzahl von Gerätebeschreibungen generiert, welche in einer Datenbank gespeichert sind. Die zumindest eine vorgebbare Bedienoberflächenbeschreibungssprache ist aus zumindest zwei unterschiedlichen Bedienoberflächenbeschreibungssprachen auswählbar.

Ein computerlesbares Speichermedium mag beispielsweise eine Festplatte, eine Floppy Disk, eine CD, eine DVD, ein Read Access Memory (RAM), ein Programmable-Read-Only-Memory (PROM), ein Erasable PROM (EPROM), ein Universal Serial Bus (USB) Speicherchip oder ein ähnlicher Datenträger sein.

Gemäß noch einem weiteren exemplarischen Ausführungsbeispiel wird ein Programm-Element zum Generieren einer Bedienoberflächenkonfiguration für ein Feldgerät geschaffen, welches, wenn es von einem Prozessor ausgeführt wird, das oben angegebene Verfahren ausführt.

Gemäß einem weiteren exemplarischen Ausführungsbeispiel wird ein Verfahren zum Interpretieren einer Bedienoberflächenbeschreibungsdatei bereitgestellt, welches an einer Eingangsschnittstelle eine erste Bedienoberflächenbeschreibungsdatei in einer ersten Bedienoberflächenbeschreibungssprache empfängt. Diese Datei wird mittels einer Interpretiereinrichtung in eine zweite Bedienoberflächenbeschreibungssprache gewandelt. Die Datei in der zweiten Sprache wird an einer Ausgangsschnittstelle der Interpretiereinrichtung bereitgestellt.

Gemäß einem weiteren exemplarischen Ausführungsbeispiel wird ein compuerlesbares Speichermedium bereitgestellt, in dem das Verfahren zum Interpretieren einer Bedienoberflächenbeschreibungsdatei gespeichert ist.

Gemäß noch einem weiteren exemplarischen Ausführungsbeispiel wird ein Programm-Element zum Interpretieren einer Bedienoberflächenbeschreibungsdatei geschaffen.

Ein Gerät, welches von einem Programm, einer Applikation oder einer Software angesprochen werden soll, mag einen Gerätetreiber oder Device Treiber benötigen. Ein Gerätetreiber mag eine standardisierte Schnittstelle zur Verfügung stellen, auf die die Software zugreifen kann. Durch das Bereitstellen einer standardisierten Schnittstelle, mag ein

Gerätehersteller den Gerätetreiber unabhängig von der eingesetzten Software und speziell auf das zu steuernde Gerät zugeschnitten entwickeln können.

Ein Feldgerätehersteller, der eine Bedienoberflächenbeschreibungsdatei oder Konfiguration für ein Bedientool anbietet, mag sich bei der Entwicklung eines Feldgerätes auf die Anpassung der Bedienoberflächenbeschreibungsdatei konzentrieren können, ohne ein eigenes Bediensystem für das Feldgerät anbieten zu müssen.

Zur Integration in ein Bedientool mag der Gerätetreiber, die Bedienoberfläche oder die Bedienoberflächenbeschreibungsdatei zu dem jeweiligen Feldgerät , dem Sensor oder dem Aktor von dem Hersteller bereitgestellt werden.

Die unterschiedlichen Bedientools mögen sich in der jeweils zu verwendenden Beschreibungssprache für die Konfigurationsdatei und auch in den zur Verfügung gestellten Parametern oder Funktionen unterscheiden. Die Parameter mögen bei der Geräteentwicklung des Feldgeräts zur Dokumentation des jeweiligen Feldgeräts dienen. Die Parameter mögen aber auch bei der Bedienung der Eingabe von Informationen zur Parametrierung oder der Ausgabe von Informationen wie Messergebnissen dienen.

Beispiele für solche Parameter mögen eine Firmwareversion, verschiedene benötigte Hilfetexte in unterschiedlichen Sprachen sein. Es können aber auch Werte sein, welche von dem Feldgerät bereitgestellt oder an das Feldgerät geliefert werden.

Sämtliche dieser Parameter mögen in einer einzigen Gerätebeschreibungsdatei oder in einer einzigen Datenbank gespeichert sein, auf die Entwickler des Feldgeräts ggf. mit unterschiedlichen Berechtigungsstufen zugreifen können mögen.

In unterschiedlichen Bedientools, die als Frame oder Container realisiert sein mögen, mögen unterschiedliche Technologien zur Auswertung der Gerätebeschreibung oder der Bedienoberflächenbeschreibungsdatei zum Einsatz kommen.

Einerseits mag die FDT - Technologie zum Einsatz kommen, die als Bedienoberflächenbeschreibungsdatei eine binäre Datei zur Gerätebeschreibung erwartet, in der die durch die FDT - Technologie definierten Schnittstellen implementiert sind.

Andererseits mag die EDD/EDDL Technologie zum Einsatz kommen, bei der die Gerätebeschreibung auf Basis der vorgegebenen Gerätebeschreibungssprache vorliegt.

Die auf FDT basierende Gerätebeschreibung mag andere Parameter oder Funktionen zur Verfügung stellen als die EDD Gerätebeschreibung. Dabei mag es Parameter geben, die sowohl von beiden Gerätebeschreibungen genutzt, interpretiert und ausgewertet werden und es mag Parameter oder Funktionen geben, welche nur eine der beiden Gerätebeschreibungen auswerten kann.

Mit einer Vorrichtung zum Generieren einer Bedienoberflächenkonfiguration mag auf eine einzige Gerätebeschreibung, die beispielsweise für Entwicklungszwecke den Entwicklern dienen mag, zurückgegriffen werden. Die Parameter, die von der jeweiligen Bedienoberflächenbeschreibungsdatei oder Bedienoberflächenbeschreibungssprache benötigt werden mögen, mögen in Abhängigkeit der vorhandenen Parameter in der einzigen Gerätebeschreibung in eine Datei eingefügt werden. Dabei mögen Filtermechanismen zum Einsatz kommen, die beispielsweise in der Bedienoberflächengeneriereinrichtung realisiert sein mögen.

Durch das Verwenden von mehreren Bedienoberflächengeneriereinrichtungen, mag die Erstellung der Bedienoberflächenbeschreibungsdatei vereinfacht oder beschleunigt werden.

Die Bedienoberflächengeneriereinrichtungen mögen derart mit einer zentralen Datenbank verbunden sein, dass sie in einer spezifisch gewählten vorgegebenen Bedienoberflächenbeschreibungssprache die Gerätebeschreibung zur Verfügung stellen können,

Es mag somit eine Idee der Erfindung sein, eine Vielzahl von Parametern an einer zentralen Stelle zu verwalten, um daraus eine Bedienoberflächenbeschreibungsdatei zu generieren, die für das jeweilige ausgewählte Bedientool angepasst ist. Dadurch mag der Aufwand für das Entwickeln und Bereitstellen mehrerer Bedienoberflächenbeschreibungsdateien eingespart werden.

Die komplette Gerätebeschreibung eines Feldgeräts mag, unabhängig von der Technologie der Bedientools, in der zentralen Datenbank hinterlegt sein. Somit mögen auch Änderungen nur an einer Stelle durchgeführt werden müssen. Je nach Zielplattform der zu erzeugenden Bedienoberfläche mag aus der zentralen Datenbank entweder ein binärer Code oder eine binäre Datei, oder es mögen von einer Laufzeitumgebung interpretierbare Daten erzeugt werden, beispielsweise in Form einer ASCII Datei.

Aus der einzigen Gerätebeschreibung oder aus der kompletten Gerätebeschreibung mag die geräteinterne Bedienung (z.B. für die Gerätebedieneinheit oder für die im Gerät integrierte Weboberfläche) erzeugt werden.

Die Bedienoberflächen, welche für die unterschiedlichen Bedientools benötigt werden, insbesondere die Beschreibung oder Beschreibungsdatei mag aus den in der gemeinsamen Datenbank vorhandenen Daten automatisch ableitbar sein. Es mag somit möglich sein, die unterschiedlichen Bedientools und insbesondere den Umfang einer Bedienoberflächenbeschreibungssprache voll auszuschöpfen.

In anderen Worten bedeutet das, dass die Anzahl der Parameter, die zur Beschreibung eines Feldgeräts oder einer Vielzahl von Feldgeräten in der zentralen Datenbank hinterlegt sind, größer sein mag, als die Anzahl an Parametern, welche von einem einzelnen Bedientool, insbesondere der Beschreibungssprache des einzelnen Bedientools zur Verfügung gestellt werden mag. Es mag sich bei den Parametern, die von einer Bedienoberflächenbeschreibungssprache bereitgestellt werden, um eine echte Untermenge der in der zentralen Datenbank hinterlegten Gerätebeschreibung handeln.

Mittels dem Zuordnen von Parametern, welche in der zentralen Datenbank vorhanden sind, zu entsprechenden Parametern in der jeweiligen Bedienoberflächenbeschreibungsdatei, mag die Bedienoberflächenkonfiguration generierbar sein. Eine Bedienoberflächengeneriereinrichtung mag unabhängig von dem Feldgerätetyp bereitgestellt werden, welches in der zentralen Datenbank beschrieben sein mag.

Die Bedienoberflächengeneriereinrichtung mag hierbei abhängig von der Technologie des Bedientools entweder Daten erzeugen, die von dem Bedientool selbst zur Darstellung der Bedienoberfläche interpretiert werden. Die Bedienoberflächengeneriereinrichtung mag auch eingerichtet sein, Daten zu erzeugen, welche von einem Interpreter oder einer Interpretiereinrichtung interpretiert werden, welcher Interpreter dem Bedientool zur Verfügung gestellt sein mag. Der Interpreter mag die erzeugten Daten interpretieren um die Bedienoberfläche darzustellen. Auf diese Weise mag es möglich sein, Konfigurationsdaten in einer proprietären Bedienoberflächenbeschreibungssprache zu erzeugen und diese Konfigurationsdaten dem Interpreter zur Verfügung zu stellen. Der Interpreter mag in Echtzeit die Daten in eine Standard-Bedienoberflächensprache, wie DDL oder FDT, zu wandeln. Diese gewandelten Daten mögen von einem Standard-Bedientool angezeigt werden.

Beispielsweise mag es möglich sein, Bedienoberflächenbeschreibungsdateien in XML zu erzeugen und diese Daten in einer Bedienoberfläche zur Anzeige zu bringen, welche auf einer binären Beschreibungssprache basiert. Es mag auch möglich sein, die XML Daten in eine Bedienoberfläche einzulesen, die auf einer Beschreibungssprache im ASCII (american standard code for information interchange) Format oder in einem anderen Textformat als XML basiert. Die Sprache der Datei, die dem Interpreter zur Verfügung gestellt wird, mag sich von der Sprache der Datei unterscheiden, die der Interpreter dem Bedientool zur Verfügung stellt. Der Interpreter nimmt die Funktion einer Middleware ein.

In einer weiteren Ausführung mag die Bedienoberflächengeneriereinrichtung auch direkt Binärdaten erzeugen, die die Darstellung der Bedienoberflächen beinhalten.

In der zentralen Datenbank oder in der gemeinsamen Datenbank mag eine komplette Gerätebeschreibung für zumindest eins oder eine Vielzahl von Feldgeräten hinterlegt sein, unabhängig von der Technologie der Bedientools. Somit mag vermieden werden, dass während des Entwicklungsprozesses eines Feldgeräts eine Bedienoberflächenkonfigurationsdatei bereitgestellt werden muss. Änderungen, die sich im Verlauf der Entwicklung oder des Entwicklungsprozesses des Feldgeräts ergeben, mögen nur an einer einzigen Stelle vorzunehmen sein, beispielsweise in der Datenbank. Die Bedienoberflächen für die unterschiedlichen Bedientools mögen dabei aus dieser gemeinsamen Datenbank automatisch generierbar oder ableitbar sein.

In der zentralen Datenbank mag die Gerätebeschreibung in Form der vorhandenen Funktionen, Geräteparameter, Parameterabhängigkeiten, Grenzwerte, Texte in unterschiedlichen Sprachen, Eingabeformulare, Kommunikationsregeln, etc. für die unterschiedlichen Geräte hinterlegt sein.

In Abhängigkeit von der zu erzeugenden Bedienoberflächenbeschreibungsdatei in der vorgebbaren Bedienoberflächenbeschreibungssprache mag die Bedienoberflächenbeschreibungssprache von der Zielplattform abhängig sein. Zielplattform bedeutet in diesem Zusammenhang die Technologie, auf der das jeweilige Bedientool basieren mag. In Abhängigkeit von der Zielplattform der zu erzeugenden Bedienoberfläche, können aus der zentralen Datenbank entweder Code oder Daten erzeugt werden, wobei die Daten von einer Laufzeitumgebung interpretierbar sind.

Gemäß noch einem weiteren Ausführungsbeispiel ist die vorgebbare Bedienoberflächenbeschreibungsdatei von einem Frame interpretierbar.

Ein Frame mag die Bezeichnung für eine Bedientoolarchitektur sein. Ein Frame mag auf einem Standard für einen Frame basieren. Da es unterschiedliche Technologien der Bedientools geben mag, mag es auch unterschiedliche Frames geben. Eine Bedienoberflächenbeschreibungsdatei, die von einem speziellen Frame interpretierbar ist, mag zu dem Frame konform oder kompatibel sein. Die Beschreibungssprache, auf der eine Bedienoberflächenbeschreibungsdatei basiert, mag konform zu einem Standard sein, auf dem das Bedientool basiert, in welches die Bedienoberflächenbeschreibungsdatei eingelesen werden soll.

Dem Frame mag auch mittels des Interpreters eine Bedienoberflächenbeschreibungsdatei zuführbar sein. Auf diese Art und Weise mag die Erzeugung der Konfiguration unabhängig von der Bedienoberfläche oder unabhängig von dem Frame sein.

Zum Erzeugen mehrerer unterschiedlicher Bedienoberflächenbeschreibungsdateien mag es unterschiedliche Bedienoberflächengenerierungseinrichtungen geben, die aus der Vielzahl der in der zentralen Datenbank vorhandenen Parameter eine Auswahl an Parametern treffen mögen. Diese Auswahl an Parametern mag der Anzahl an Parametern für das jeweilige Bedientool, insbesondere für die Technologie für das Bedientool entsprechen, so dass die Möglichkeiten der unterschiedlichen Bedientools voll ausgeschöpft werden mögen. D.h., dass sämtliche Parameter, die von der jeweiligen Beschreibungssprache zur Verfügung gestellt werden, ausgenutzt werden mögen.

Gemäß noch einem weiteren Ausführungsbeispiel ist der Frame ausgewählt aus der Gruppe der Frames bestehend aus PACTware™, FieldCare, SmartVision, Melody, Freelance, CX Profi Bus, FDT Container, Fieldmate, Field Device Manager, SIMATIC PDM, Emerson AMS, Emerson Delta V etc.

Mittels dem Bereitstellen von Bedienoberflächengenerierungseinrichtungen, die eine Bedienoberflächenbeschreibungsdatei, die zu den jeweiligen Frames kompatibel ist, anbietet, mag die Flexibilität der Vorrichtung zum Generieren einer Bedienoberflächenkonfiguration erhöht werden. Mit einer Vielzahl an Bedienoberflächengeneriereinrichtungen mag somit ein weites Feld an verfügbaren Frames oder Frame Standards abdeckbar sein.

In dem Fall der Entwicklung einer neuen Frame-Technologie mag sich die Vorrichtung zum Generieren einer Bedienoberflächenkonfiguration für ein Feldgerät leicht erweitern lassen, indem eine entsprechende neue Bedienoberflächengenerierungseinrichtung bereit gestellt wird. Solch eine zusätzliche Bedienoberflächengeneriereinrichtung mag sich in der Vorrichtung zum Generieren einer Bedienoberflächenkonfiguration leicht integrieren lassen.

Gemäß einem weiteren exemplarischen Ausführungsbeispiel weist die Vorrichtung zum Generieren einer Bedienoberflächenkonfiguration für ein Feldgerät eine Eingabeeinrichtung auf. Die Eingabeeinrichtung ist mit der Datenbank verbunden und die Eingabeeinrichtung ist eingerichtet, das Eingeben der Vielzahl von Gerätedaten und Parameter für das Feldgerät zu ermöglichen. Über die Eingabeeinrichtung mag die Datenbank gespeist werden können.

Die Eingabeeinrichtung mag ein Kommunikationsnetz umfassen, so dass ein Fernzugriff auf die zentrale Datenbank ermöglicht werden kann, beispielsweise über das Internet. Die Eingabeeinrichtung mag außerdem eine Benutzerrechteverwaltung aufweisen, mit der gesteuert werden kann, welcher Benutzer auf welche Parameter oder Funktionen, die in der zentralen Datenbank für ein entsprechendes Feldgerät bereitgestellt werden, zugreifen kann.

Gemäß einem weiteren exemplarischen Ausführungsbeispiel weist die Eingabeeinrichtung eine Nutzerrechteverwaltung oder Benutzerrechteverwaltung auf.

Mittels der Benutzerrechteverwaltung mag vorgebbar sein, welcher Personenkreis eine Berechtigung hat welche Gerätedaten in der Datenbank anzulegen, zu ändern oder zu löschen. Solche Personenkreise können beispielsweise Mitarbeiter einer Entwicklungsabteilung, einer Vertriebsabteilung oder einer Marketingabteilung sein. Auch die Mitarbeiter innerhalb der Abteilungen können unterschiedliche Berechtigungen haben. Beispielsweise mag eine Unterscheidung nach Entwicklungsteams erfolgen.

Die Benutzerrechteverwaltung mag auch innerhalb der Datenbank mittels Zugriffsregeln auf die Datenbank eingerichtet sein. Dabei mag die Benutzerverwaltung der Bedieneinrichtung auf die Zugriffsregeln der Datenbank zugreifen.

Gemäß einem anderen exemplarischen Ausführungsbeispiel weist die zumindest eine Bedienoberflächengeneriereinrichtung eine Nutzerrechteverwaltung auf.

Die Nutzerrechteverwaltung der Bedienoberflächengeneriereinrichtung mag unabhängig von der Nutzerrechteverwaltung der Eingabeeinrichtung sein. Die Nutzerrechteverwaltung der Bedienoberflächengeneriereinrichtung mag es unterschiedlichen Benutzern ermöglichen unterschiedliche Bedienoberflächenbeschreibungsdateien zu erzeugen. Auch die

Nutzerrechteverwaltung der Bedienoberflächengeneriereinrichtung mag auf Zugriffsregeln der Datenbank zugreifen.

In der zentralen Datenbank mag eine Vielzahl von Parametern gespeichert sein, die zu unterschiedlichen Feldgeräten gehören. Wenn insbesondere eine Vielzahl an Gerätebeschreibungsdaten für mehrere Geräte verfügbar ist, mag mittels Benutzerrechten einstellbar sein, dass auf die Daten, Informationen oder Parameter, die zu einem bestimmten Feldgerät gehören, lediglich das Entwicklungsteam zugreifen kann, welches für die Entwicklung des Feldgeräts verantwortlich ist.

Eine Benutzerrechteverwaltung mag es ermöglichen, für die gesamte Produktpalette eines Feldgeräteherstellers sämtliche Versionen und sämtliche Feldgerätetypen und insbesondere deren Gerätebeschreibungen in einer gemeinsamen Datenbank abzulegen und für die Generierung der Bedienoberflächenbeschreibungsdateien nur eine Untergruppe der verfügbaren Informationen auszuwählen. Die Auswahl mag eine Ansicht oder ein Ausschnitt der insgesamt verfügbaren Daten sein.

Es mag ferner möglich sein, über eine Fernabfrage einen aktuellen Satz an Gerätebeschreibungen für ein spezielles vorgebbares Feldgerät über ein Netzwerk abzufragen. Die Generierung der Bedienoberflächenbeschreibungsdatei mag dabei Online möglich sein, wodurch auf die neueste Version einer Bedienoberflächenbeschreibungsdatei zu einem Feldgerät zugegriffen werden kann. Von dem jeweiligen Entwicklungsteam mag jedoch vorgebbar sein, welche der vorhandenen Parameter abgefragt werden können.

Gemäß noch einem anderen Ausführungsbeispiel mag die Bedienoberflächenbeschreibungsdatei aus der Gruppe bestehend aus einer binären Datei und einer Textdatei oder ASCII Datei auswählbar sein.

Durch das Bereitstellen von sowohl binären Dateien als auch von Textdateien mag die Bereitstellung einer Bedienoberflächenbeschreibungsdatei für sämtliche Bedientools oder Bedientooltechnologien ermöglicht werden.

Gemäß noch einem anderen Ausführungsbeispiel mag die Bedienoberflächenbeschreibungssprache, die der Bedienoberflächenbeschreibungsdatei zugrunde liegt, aus der Gruppe bestehend aus Device Description Language (DDL), Extensible Markup Language (XML) und Field Device Tool (FDT) ausgewählt sein. In einem anderen Ausführungsbeispiel mag ein oder eine Vielzahl von proprietären Dateiformaten zur Beschreibung der Bedienoberfläche zum Einsatz kommen. Ein proprietäres Dateiformat mag auf einer proprietäten Beschreibungssprache basieren, welche sich von den standardisierten Beschreibungssprachen DDL, XML oder FDT unterscheidet.

Durch die Bereitstellung dieser unterschiedlichen Bedienoberflächenbeschreibungssprachen mag es möglich sein, ein Feldgerät in eine Vielzahl verschiedener Bedientools zu integrieren. Im Falle einer Entwicklung einer neuen Beschreibungssprache mag die Vorrichtung zum Generieren einer Bedienoberflächenkonfiguration an die neue Beschreibungssprache anpassbar sein, indem eine entsprechende Bedienoberflächengeneriereinrichtung bereitgestellt wird.

Gemäß einem weiteren Ausführungsbeispiel weist die Vielzahl von Gerätedaten eine erste Anzahl von gerätespezifischen Parametern auf und die Bedienoberflächenbeschreibungsdatei weist eine zweite Anzahl von gerätespezifischen Parametern auf. Beispielsweise mag die erste Anzahl von gerätespezifischen Parametern größer als die zweite Anzahl von gerätespezifischen Parametern sein.

Durch die unterschiedliche Anzahl an unterstützten gerätespezifischen Parametern mag es möglich sein, Untergruppen von gerätespezifischen Parametern bereitzustellen.

Gemäß noch einem anderen Ausführungsbeispiel sind die gerätespezifischen Parameter ausgewählt aus der Gruppe bestehend aus einem Feldgerätename, einem Sensorname, einem Aktorname, einem Zugriffsrecht, einer Versionsnummer von der Version, einem Gerätetyp, einer vorhandene Funktion, einem Geräteparameter, einer Parameterabhängigkeit, einem Grenzwert, einem Text in unterschiedlichen Sprachen, einem Eingabeformular und einer Kommunikationsregel.

Über diese gerätespezifischen Parameter hinausgehend mögen unterschiedliche Feldgeräte unterschiedliche Parameter benötigen und somit mag es nötig sein, diese Vielzahl an Parametern, welche der Beschreibung des Feldgeräts dienen, in der zentralen Datenbank vorzugeben. Ein Entwickler mag sich mit diesen gespeicherten gerätespezifischen Parametern einen schnellen Überblick über die vorhandenen Parameter für ein Feldgerät verschaffen können.

Gemäß einem weiteren Ausführungsbeispiel ist die zentrale Datenbank ausgewählt aus der Gruppe der Datenbanken bestehend aus einer Oracle Datenbank oder einer beliebigen SQL Datenbank wie beispielsweise dem Microsoft^{®} SQL - Server oder MySQL. Jede Datenbank mag einsetzbar sein, welche zur Speicherung der Daten eingerichtet ist. Insbesondere mag die Datenbank auch in Form einer einfachen Datei (Text- oder Binärdatei) vorliegen. Diese Datei mag entweder einen proprietären Aufbau haben oder beispielsweise als XML - Dokument vorliegen. Indem die Vorrichtung zum Generieren einer Bedienoberflächenkonfiguration auf unterschiedliche Datenbanken aufbaut, mag es möglich sein, die Vorrichtung in eine bestehende Serverstruktur eines Unternehmens zu integrieren.

Gemäß einem anderen exemplarischen Ausführungsbeispiel weist die Vorrichtung zum Generieren einer Bedienoberflächenkonfiguration für zumindest ein Feldgerät einen Webserver auf, wobei der Webserver eingerichtet ist, die Vorrichtung zum Generieren einer Bedienoberflächenkonfiguration für ein Feldgerät zu steuern.

Auf den Webserver mag mittels eines Webclients zugreifbar sein, wodurch eine Datenpflege der gerätespezifischen Parameter auf der zentralen Datenbank über das Internet oder jedes andere Internetprotokoll-Netz (IP-Netz) durchführbar sein mag.

Gemäß noch einem anderen Ausführungsbeispiel ist das zumindest eine Feldgerät aus der Gruppe der Feldgeräte bestehend aus einem Füllstandsmessgerät, Druckmessgerät und Durchflussmessgerät ausgewählt.

Es mag möglich sein für unterschiedliche Feldgerätetypen zumindest eine oder eine Vielzahl von Bedienoberflächenbeschreibungsdateien bereitzustellen.

Gemäß noch einem anderen Ausführungsbeispiel weist die Vorrichtung zum Generieren einer Bedienoberflächenkonfiguration für zumindest ein Feldgerät eine Netzwerkschnittstelle auf, wobei die Netzwerkschnittstelle zum Zugriff auf die Datenbank über ein Netzwerk eingerichtet ist.

Die Netzwerkschnittstelle mag sowohl an der Eingangs-Schnittstelle als auch an der Ausgangs-Schnittstelle angeordnet sein. Eine Netzwerkschnittstelle mag ein Modem sein, mit dem ein Zugriff über das öffentliche Telefonnetz möglich ist. Ferner mag eine Schnittstelle zu einem Mobilfunknetz vorhanden sein. Damit mag eine Eingabe von neuen Beschreibungsparametern als auch eine Abfrage von Bedienoberflächenbeschreibungsdateien über das jeweilige Netz möglich sein. Bei dem Netz mag es sich um jedes Daten- bzw. Sprachkommunikationsnetz handeln. Ein weiteres Beispiel für ein Netz mag das Internet sein.

Gemäß noch einem exemplarischen Ausführungsbeispiel ist die zentrale Datenbank als ein Expertensystem ausgebildet. Ein Expertensystem mag die Verknüpfung unterschiedlicher Daten erlauben, wodurch Abfragen oder Suchen von einzelnen Parametern oder Kombinationen von Parametern vereinfacht wird. Mittels des Expertensystems mag sich auch eine Versionskontrolle während der Entwicklung eines Feldgeräts durchführen lassen.

Gemäß einem weiteren Ausführungsbeispiel ist die Interpretiereinrichtung eingerichtet eine Bedienoberflächenbeschreibungsdatei umzuwandeln, welche von einer Bedienoberflächengeneriereinrichtung generiert worden ist.

Gemäß noch einem anderen Ausführungsbeispiel ist die erste Bedienoberflächenbeschreibungssprache eine text-basierte Beschreibungssprache, beispielsweise XML.

Gemäß noch einem anderen Ausführungsbeispiel ist die zweite Beschreibungssprache eine Standard-Bedienoberflächenbeschreibungssprache, wie beispielsweise EDD oder FDT.

Viele Fortbildungen der Erfindung wurden Bezug nehmend auf die Vorrichtung zum Generieren einer Bedienoberflächenkonfiguration für zumindest ein Feldgerät beschrieben. Diese Ausgestaltungen gelten auch für das Verfahren, das computerlesbare Speichermedium und das Programm-Element. Ebenso gelten sie für die Vorrichtung zum Interpretieren einer Bedienoberflächenbeschreibungsdatei, für das Verfahren zum Interpretieren einer Bedienoberflächenbeschreibungsdatei, für das computerlesbare Speichermedium mit dem Verfahren zum Interpretieren einer Bedienoberflächenbeschreibungsdatei und dem Programm-Element zum Interpretieren einer Bedienoberflächenbeschreibungsdatei.

Im Folgenden werden vorteilhafte Ausführungsbeispiele der vorliegenden Erfindung mit Verweis auf die Figuren beschrieben.
- Fig. 1: zeigt eine Vorrichtung zum Generieren einer Bedienoberflächenkonfiguration gemäß einem Ausführungsbeispiel der vorliegenden Erfindung;
- Fig. 2: zeigt ein Flussdiagramm für ein Verfahren zum Generieren einer Bedienoberflächenkonfiguration für ein Feldgerät gemäß einem Ausführungsbeispiel der vorliegenden Erfindung.
- Fig. 3: zeigt ein Blockdiagramm eines Bedientools mit einem Interpreter gemäß einem Ausführungsbeispiel der vorliegenden Erfindung.

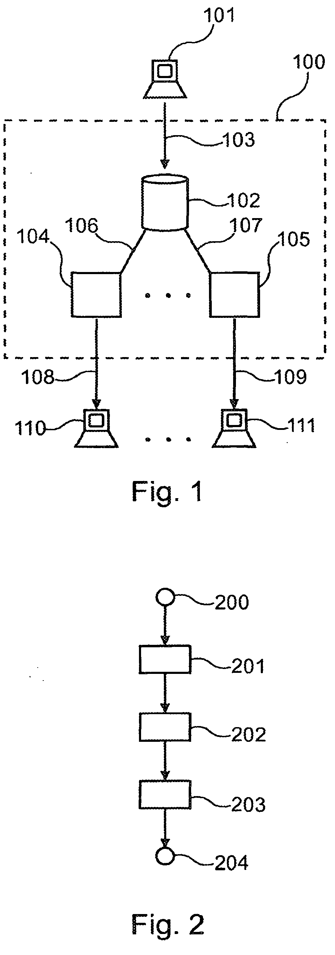

Die Darstellungen in den Figuren sind schematisch und nicht maßstäblich. In der folgenden Beschreibung der Fig. 1 und Fig. 2 werden die gleichen Bezugszeichen für gleiche oder sich entsprechende Elemente verwendet.

Die Fig. 1 zeigt schematisch eine Vorrichtung 100 zum Generieren einer Bedienoberflächenkonfiguration für zumindest ein Feldgerät oder zumindest ein Messgerät. Mittels der Eingabeeinrichtung 101, die in Fig. 1 als PC (Personal Computer) 101 dargestellt ist, lassen sich auf der zentralen Datenbank 102 die Gerätebeschreibungen eines oder einer Vielzahl von Feldgeräten, Sensoren oder Aktoren eingeben. Eine Gerätebeschreibung weist beispielsweise Parameter oder Funktionen des Feldgeräts auf.

Die Verbindung 103, Eingangs-Schnittstelle 103 oder Schnittstelle 103 zwischen der Eingabeeinrichtung 101 und der zentralen Datenbank 102 kann als Direktverbindung 103 oder als Netzwerkverbindung 103 ausgebildet sein. Über in Fig. 1 nicht dargestellte Zugriffsteuerungsmechanismen lassen sich Rechte, Regeln oder Policies einstellen, die es erlauben, dass nur eine bestimmte Auswahl an Personen auf bestimmte Daten in der zentralen Datenbank zugreifen können. So kann gesteuert werden, dass ein Entwicklungsteam, insbesondere Mitglieder eines Entwicklungsteams für Füllstandsmessgeräte, nur auf die unterschiedlichen Modelle, insbesondere die Gerätebeschreibungen der unterschiedlichen Modelle von Füllstandsmessgeräten, zugreifen können.

In der zentralen Datenbank 102 sind die Gerätebeschreibungen abhängig von der Version als Modelle in Bezug auf die real existierenden Feldgeräte gespeichert. Pro Gerät, insbesondere pro Gerätetyp, werden Parameter, Funktionen oder Texte, wie Hilfetexte oder Texte in unterschiedlichen Beschreibungen, Fotos der Feldgeräte oder andere Gerätebeschreibungen in Bezug zu dem realen Feldgerät gespeichert.

Die Vorrichtung 100 zum Generieren einer Bedienoberflächenkonfiguration für zumindest ein Feldgerät weist weiter die Vielzahl an Bedienoberflächengeneriereinrichtungen 104 und 105 auf. Während in Fig. 1 lediglich zwei Bedienoberflächengeneriereinrichtungen 104, 105 dargestellt sind, kann eine Vorrichtung zum Generieren einer Bedienoberflächenkonfigration eine Vielzahl an unterschiedlichen Bedienoberflächengeneriereinrichtungen 104, 105 auf-weisen. Die Vorrichtung mag aber auch nur genau eine Bedienoberflächengeneriereinrichtung 104, 105 aufweisen. Die Bedienoberflächengeneriereinrichtung 104, 105 ist über die Verbindung 106, 107 oder Verbindungsleitung 106, 107 mit der zentralen Datenbank 102 verbunden.

Über die Verbindung 106, 107 kann die Bedienoberflächengeneriereinrichtung, die für sie relevanten Gerätebeschreibungen aus der zentralen Datenbank 102 auswählen. Die Daten, die für die Bedienoberflächengeneriereinrichtung 104, 105 relevant sind, richten sich nach der Zielplattform, für die die erzeugte Bedienoberflächenbeschreibungsdatei eingesetzt werden soll. Über die Ausgangs-Schnittstelle 108, 109 wird die Ausgabe einer Bedienoberflächenbeschreibungsdatei in dem jeweiligen Datenformat der Zielplattform ermöglicht. Die Schnittstellen 108, 109 können auch als Netzwerkschnittstellen 108, 109 ausgebildet sein.

Die unterschiedlichen Dateiformate sind in Fig. 1 durch die unterschiedlichen Schnittstellen 108 und 109 dargestellt. Es ist aber auch denkbar, dass nur eine einzige Schnittstelle 108, 109 vorhanden ist, über welche die unterschiedlichen Beschreibungsdateien bereitgestellt werden. Diese Schnittstellen können direkt mit dem Steuer-PC 110, 111, der Auswerteeinrichtung 110, 111 oder mit dem Bedientool 110, 111 verbunden sein. Die Einspielung der Bedienoberflächenbeschreibungsdatei in das Bedientool 110, 111 kann aber auch mittels eines Datenträgers, wie eines USB Speicherchips, einer Speicherkarte, einer Floppy Disk, einer CD, einer DVD oder Festplatte erfolgen.

In Fig. 1 sind zwei unterschiedliche Bedientools, die auf unterschiedlichen Technologien basieren 110, 111, dargestellt. Beispielsweise kann es sich um ein auf FDT basierendes Bedientool 110 und ein auf EDD basierendes Bedientool 111 handeln. Mittels einer in Fig. 1 nicht dargestellten Auswahleinrichtung hat ein Benutzer die Möglichkeit eine Gerätebeschreibung für ein bestimmtes Feldgerät und für ein bestimmtes Zielsystem oder zumindest ein bestimmtes Zielsystem auszuwählen. Die Auswahl der relevanten Parameter aus den gemeinsamen Daten der zentralen Datenbank kann beispielsweise über Filtermechanismen erfolgen.

Die Gerätebeschreibungen für ein bestimmtes Feldgerät können in einem Batchbetrieb für alle verfügbaren Zielsysteme erzeugt werden. Unter einem Batchbetrieb mag ein gesteuertes Abarbeiten von Einzeloperationen verstanden werden. Ebenso ist denkbar, dass im Batchbetrieb die Bedienoberflächen für ein Zielsystem für alle in der Datenbank gespeicherten Feldgeräte erzeugt werden. In einer weiteren Ausführung werden im Batchbetrieb für alle in der Datenbank vorhandenen Feldgeräte für alle verfügbaren Zielsysteme die Bedienoberflächen generiert.

Fig. 2 zeigt ein Verfahren zum Generieren einer Bedienoberflächenkonfiguration für ein Feldgerät, wobei das Verfahren in dem Schritt 200 in einem Startpunkt beginnt. Mit dem Auswählen des Feldgeräts oder Feldgerätetyps in Schritt 201, für den die Bedienoberflächenbeschreibungsdatei erzeugt werden soll, beginnt das Verfahren. In diesem Schritt kann zumindest ein einzelnes, mehrere oder alle in der Datenbank verfügbaren Feldgeräte ausgewählt werden.

In Schritt 202 werden die Beschreibungssprachen oder die Zielsysteme ausgewählt, für die die Bedienoberflächenbeschreibungen, Konfigurationen oder Bedienoberflächenbeschreibungsdateien erzeugt werden sollen. Hierbei kann nur ein einzelnes Zielsystem, zumindest ein Zielsystem, mehrere Zielsysteme oder alle verfügbaren Zielsysteme ausgewählt werden. In Schritt 203 werden die Bedienoberflächenbeschreibungsdateien in Abhängigkeit der gewählten Feldgeräte und Zielsysteme erzeugt.

Das Verfahren schließt in dem Endpunkt 204.

Die Parameter oder die Gerätebeschreibung in der zentralen Datenbank ist mit einem Gerätekatalog oder einer Gerätebibliothek vergleichbar. Unterschiedliche Bedientoolhersteller setzen unterschiedliche Frames und unterschiedliche Technologien für die Beschreibung der Bedienoberfläche ein. Parameter oder Gerätebeschreibungen, können in einem ersten Format in einer zentralen Datenbank gespeichert sein und in ein zweites Format gewandelt werden, das einer gewünschten Bedienoberflächenbeschreibungssprache entspricht.

Eine Bedienoberflächenbeschreibungsdatei, welche generiert wird, kann als Zieldatei bezeichnet werden.

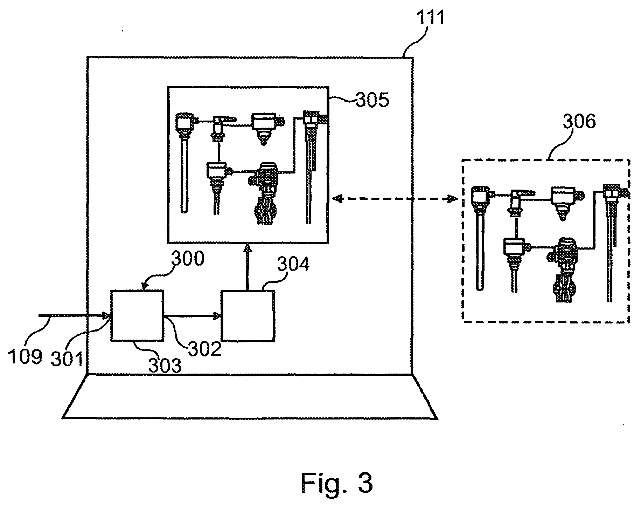

Fig. 3 zeigt ein Blockdiagramm eines Bedientools 110, 111 mit einem Interpreter 300 gemäß einem Ausführungsbeispiel der vorliegenden Erfindung. Das Bedientool 110, 111 erhält über die Eingangsschnittstelle 301 eine Bedienoberflächenkonfiguration in einer ersten Sprache. Diese Bedienoberflächenkonfiguration, insbesondere die Bedienoberflächenkonfigurationsdatei, kann über die Netzwerkverbindung 109 in das Bedientool eingespielt 111 werden. Nicht dargestellt ist in der Fig. 3 eine weitere Möglichkeit des Einspielens der Konfiguration. Bei dieser weiteren Möglichkeit handelt es sich um das Einspielen der Datei über ein Lesegerät. Das Lesegerät kann einen Datenträger auf dem die Datei gespeichert ist einlesen.

In der Interpretiereinrichtung 303 wird die Bedienoberflächenkonfigurationsdatei von der ersten Sprache in die zweite Sprache gewandelt. Die erste Bedienoberflächenbeschreibungssprache mag beispielsweise eine XML Datei sein, die nach einem proprietärem Schema aufgebaut ist, welches der Bedientoolengine 304 unbekannt ist. Die zweite Bedienoberflächenbeschreibungssprache mag beispielsweise EDD sein, die der Bedientoolengine 304 bekannt ist. Somit kann eine Beschreibungssprache, deren Format für eine Bedientoolengine 304 unbekannt ist eingesetzt werden und in ein Format gewandelt werden, welches der Bedientoolengine 304 bekannt ist. Die Konfiguration wird in einer bekannten Bedienoberflächenbeschreibungssprache oder in einem bekannten Format an der Ausgangsschnittstelle 302 bereitgestellt. In der Interpretiereinrichtung 303 kann aus zumindest zwei Zielbeschreibungssprachen für die Datei gewählt werden, die an der Ausgangsschnittstelle 302 bereitgestellt wird.

Die Bedientoolengine 304 empfängt die Konfiguration in der bekannten Sprache, beispielsweise in EDD oder FDT, und kann daraus die Gerätebeschreibung erzeugen, die auf der Bedienoberfläche 305 des Bedientools 111 dargestellt wird. Dazu kann das Bedientool einen Bildschirm aufweisen.

In der Fig. 3 ist dargestellt, wie das physikalisch existierende Messsystem 306 auf der Bedienoberfläche 305 des Bedientools dargestellt ist.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Gemäß einem weiteren exemplarischen Ausführungsbeispiel der vorliegenden Erfindung sind die gerätespezifischen Parameter aus der Gruppe bestehend aus Messgerätename, Sensorname, Feldgerätename, Zugriffsrecht, Versionsnummer, Firmwareversion, Gerättyp, vorhandene Funktion, Geräteparameter, Parameterabhängigkeit, Grenzwert, ein Text in unterschiedlichen Sprachen, ein Eingabeformular, eine Kommunikationsregel und ein Grenzwert ausgewählt.

Gemäß noch einem anderen exemplarischen Ausführungsbeispiel der vorliegenden Erfindung ist die Datenbank zumindest eine Datenbank ausgewählt aus der Gruppe bestehend aus einer Oracle-Datenbank und einer SQL-Datenbank.

Gemäß noch einem anderen exemplarischen Ausführungsbeispiel der vorliegenden Erfindung ist das zumindest eine Feldgerät zumindest ein Feldgerät, ausgewählt aus der Gruppe bestehend aus einem Füllstandsmessgerät, Druckmessgerät oder Durchflussmessgerät.

Gemäß noch einem weiteren exemplarischen Ausführungsbeispiel der vorliegenden Erfindung ist die Datenbank ein Expertensystem.

Gemäß einem weiteren exemplarischen Ausführungsbeispiel der vorliegenden Erfindung ist die zweite Bedienoberflächenbeschreibungssprache eine Standard-Bedienoberflächenbeschreibungssprache.

Gemäß einem weiteren exemplarischen Ausführungsbeispiel ist die zweite Bedienoberflächenbeschreibungssprache EDD oder FDT.

## Patentansprüche

1. Eine Vorrichtung (100) zum Generieren einer Bedienoberflächenkonfiguration für zumindest ein Feldgerät, wobei die Bedienoberflächenkonfiguration eine Bedienung des Feldgerätes mit einem Bedientool erlaubt, die Vorrichtung (100) aufweisend:
eine einzige Datenbank (102);
zumindest eine Bedienoberflächengeneriereinrichtung (104, 105);
wobei die Datenbank (102) eingerichtet ist, eine Vielzahl von Gerätedaten für das zumindest eine Feldgerät abzuspeichern;
zumindest eine Auswahleinrichtung eingerichtet zum Auswählen einer Zielplattform aus der Vielzahl der Zielplattformen wobei durch diese Auswahl eine entsprechende Auswahl aus der Datenbank von Gerätedaten erfolgt, die der ausgewählten Zielplattform entsprechen, wobei die Zielplattformen jeweilige Bedientool-Technologien definieren;
wobei die zumindest eine Bedienoberflächengeneriereinrichtung (104, 105) eingerichtet ist, in Abhängigkeit der ausgewählten Gerätedaten, eine dem zumindest einem Feldgerät zugeordnete Bedienoberflächenbeschreibungsdatei in zumindest einer vorgebbaren Bedienoberflächenbeschreibungssprache zu generieren;
wobei die zumindest eine vorgebbare Bedienoberflächenbeschreibungssprache aus zumindest zwei unterschiedlichen Bedienoberflächenbeschreibungssprachen, in Abhängigkeit vom der gewählten Zielplattform, auswählbar ist.

2. Vorrichtung (100) nach Anspruch 1, weiter aufweisend:
eine Eingabeeinrichtung (101);
wobei die Eingabeeinrichtung (101) mit der Datenbank (102) verbunden ist;
wobei die Eingabeeinrichtung (101) eingerichtet ist, das Eingeben der Vielzahl von Gerätedaten für das zumindest eine Feldgerät zu ermöglichen.

3. Vorrichtung (100) nach Anspruch 2, wobei die Eingabeeinrichtung (101) eine Nutzerrechteverwaltung aufweist.

4. Vorrichtung (100) nach einem der Ansprüche 1 bis 3, wobei die zumindest eine Bedienoberflächengeneriereinrichtung (104, 105) eine Nutzerrechteverwaltung aufweist.

5. Vorrichtung (100) nach einem der Ansprüche 1 bis 4, weiter aufweisend:
eine Netzwerkschnittstelle (103, 108, 109);
wobei die Netzwerkschnittstelle zum Zugriff auf die Datenbank über ein Netzwerk eingerichtet ist.

6. Eine Vorrichtung (300) zum Interpretieren einer Bedienoberflächenbeschreibungsdatei wobei die Bedienoberflächenbeschreibungsdatei eine Bedienung eines Feldgerätes mit einem Bedientool erlaubt, aufweisend:
eine Eingangsschnittstelle (301);
eine Interpretiereinrichtung (303)
eine Ausgangsschnittstelle (302);
wobei die Eingangsschnittstelle (301) eingerichtet ist, die Bedienoberflächenbeschreibungsdatei in einer ersten Bedienoberflächenbeschreibungssprache zu empfangen;
wobei die Interpretiereinrichtung (303) eingerichtet ist, die Bedienoberflächenbeschreibungsdatei in Echtzeit und in Abhängigkeit von einer Auswahl einer Zielplattform aus einer Vielzahl von Zielplattformen, in eine zweite Bedienoberflächenbeschreibungssprache umzuwandeln, wobei die Zielplattformen jeweilige Bedientool-Technologien definieren; und
wobei die Interpretiereinrichtung (303) eingerichtet ist, die Bedienoberflächenbeschreibungsdatei in der zweiten Bedienoberflächenbeschreibungssprache an der Ausgangsschnittstelle (302) bereitzustellen.

7. Vorrichtung (300) nach Anspruch 6, wobei die Eingangsschnittstelle (301) eingerichtet ist eine Bedienoberflächenkonfigurationsdatei, welche von der Vorrichtung (100) zum Generieren einer Bedienoberflächenkonfiguration nach einem der Ansprüche 1 bis 5 generiert worden ist, zu empfangen.

8. Vorrichtung (300) nach Anspruch 6 oder 7, wobei die erste Bedienoberflächenbeschreibungssprache eine text-basierte Beschreibungssprache ist.

9. Vorrichtung nach Anspruch 6 oder 7, wobei die erste Bedienoberflächenbeschreibungssprache XML ist.

10. Ein Verfahren zum Generieren einer Bedienoberflächenkonfiguration für zumindest ein Feldgerät, wobei die Bedienoberflächenkonfiguration eine Bedienung des Feldgerätes mit einem Bedientool erlaubt, das Verfahren aufweisend:
Auswählen des zumindest einen Feldgeräts;
Auswählen einer Zielplattform aus einer Vielzahl der Zielplattformen wobei durch diese Auswahl eine entsprechende Auswahl von Gerätedaten aus einer einzigen Datenbank erfolgt, wobei die ausgewählten Gerätedaten der ausgewählten Zielplattform entsprechen, wobei die Zielplattformen jeweilige Bedientool-Technologien definieren;
In Abhängigkeit von der ausgewählten Zielplattform, Auswählen von zumindest einer Bedienoberflächenbeschreibungssprache;
Generieren einer dem zumindest einem Feldgerät zugeordneten Bedienoberflächenbeschreibungsdatei in der zumindest einen Bedienoberflächenbeschreibungssprache aus den ausgewählten Gerätedaten;
wobei die zumindest eine Bedienoberflächenbeschreibungssprache, in Abhängigkeit von der ausgewählten Zielplattform, aus zumindest zwei unterschiedlichen Bedienoberflächenbeschreibungssprachen auswählbar ist.

11. Ein computerlesbares Speichermedium, in dem ein Programm zum Generieren einer Bedienoberflächenkonfiguration für zumindest ein Feldgerät gespeichert ist, welches Programm, wenn es von einem Prozessor ausgerührt wird, das Verfahren nach Anspruch 10 ausführt.

12. Ein Programm-Element, zum Generieren einer Bedienoberflächenkonfiguration für zumindest ein Feldgerät, welches Programm-Element, wenn es von einem Prozessor ausgeführt wird, das Verfahren nach Anspruch 10 ausführt.

13. Ein Verfahren zum Interpretieren einer Bedienoberflächenbeschreibungsdatei wobei die Bedienoberflächenbeschreibungsdatei eine Bedienung eines Feldgerätes mit einem Bedientool erlaubt, aufweisend:
empfangen einer ersten Bedienoberflächenbeschreibungsdatei in einer ersten Bedienoberflächenbeschreibungssprache an einer Eingangsschnittstelle (301);
umwandeln, in Echtzeit und in Abhängigkeit von einer Auswahl einer Zielplattform aus einer Vielzahl von Zielplattformen, der Bedienoberflächenbeschreibungsdatei in eine zweite Bedienoberflächenbeschreibungssprache mittels einer Interpretiereinrichtung (303), wobei die Zielplattformen jeweilige Bedientool-Technologien definieren;
bereitstellen der Bedienoberflächenbeschreibungsdatei in der zweiten Bedienoberflächenbeschreibungssprache an einer Ausgangsschnittstelle (302).

14. Ein computerlesbares Speichermedium, in dem ein Programm zum Interpretieren einer Bedienoberflächenbeschreibungsdatei gespeichert ist, welches Programm, wenn es von einem Prozessor ausgeführt wird, das Verfahren nach Anspruch 13 ausführt.

15. Ein Programm-Element, zum Interpretieren einer Bedienoberflächenbeschreibungsdatei, welches Programm-Element, wenn es von einem Prozessor ausgeführt wird, das Verfahren nach Anspruch 13 ausführt.

## Claims

1. An apparatus (100) for generating a user interface configuration for at least one field device, wherein the user interface configuration allows for operation of the field device with an operation tool, the apparatus (100) comprising:
a single database (102);
at least one user interface generating device (104, 105);
wherein the database (102) is adapted to store a plurality of device data for the at least one field device;
at least one selecting device adapted for selecting a target platform from the plurality of target platforms, wherein this selection causes a corresponding selection of device data from the database, which device data corresponds to the selected target platform, wherein the target platforms define corresponding operation tool technologies;
wherein the at least one user interface generating device (104, 105) is adapted, to generate a user interface description file that is allocated to the at least one field device in at least one predeterminable user interface description language depending on the selected device data;
wherein the at least one predeterminable user interface description language is selectable from at least two different user interface description languages, depending on the selected target platform.

2. The apparatus (100) according to claim 1, further comprising:
an input device (101);
wherein the input device (101) is connected to the database (102);
wherein the input device (101) is adapted to allow for inputting the plurality of device data for the at least one field device.

3. The apparatus (100) according to claim 2, wherein the input device (101) comprises a user rights administration.

4. The apparatus (100) according to one of claims 1 to 3, wherein the at least one user interface generating device (104, 105) comprises a user rights administration.

5. The apparatus (100) according to one of claims 1 to 4, further comprising:
a network interface (103, 108, 109);
wherein the network interface is adapted for the access to the database via a network.

6. An apparatus (300) for interpreting a user interface description file, wherein the user interface description file allows for operation of the field device with an operation tool comprising:
an input interface (301);
an interpretation device (303);
an output interface (302);
wherein the input interface (301) is adapted to receive the user interface description file in a first user interface description language;
wherein the interpretation device (303) is adapted to convert the user interface description file into a second user interface description language in real time and depending on the selection of a target platform from a plurality of target platforms, wherein the target platforms define corresponding operation tool technologies; and
wherein the interpretation device (303) is adapted to provide the user interface description file in the second user interface description language at the output interface (302).

7. The apparatus (300) according to claim 6, wherein the input interface (301) is adapted to receive a user interface configuration file that has been generated by the apparatus (100) for generating a user interface configuration according to one of claims 1 to 5.

8. The apparatus (300) according to claim 6 or 7, wherein the first user interface description language is a text-based description language.

9. The apparatus according to claim 6 or 7, wherein the first user interface description language is XML.

10. A method for generating a user interface configuration for at least one field device, wherein the user interface configuration allows for operation of the field device with an operation tool, the method comprising:
selecting the at least one field device;
selecting a target platform from a plurality of target platforms, wherein this selection causes a corresponding selection of device data from a single database, wherein the selected device data corresponds to the selected target platform, wherein the target platforms define corresponding operation tool technologies;
selecting at least one user interface description language depending on the selected target platform;
generating from the selected device data a user interface description file, allocated to the at least one field device, in the at least one user interface description language;
wherein the at least one user interface description language is selectable from at least two different user interface description languages, depending on the selected target platform.

11. A computer-readable storage medium, in which a program for generating a user interface configuration for at least one field device is stored, which program, when executed on a processor, carries out the method according to claim 10.

12. A program element for generating a user interface configuration for at least one field device, which program element, when executed on a processor, carries out the method according to claim 10.

13. A method for interpreting a user interface description file, wherein the user interface description file allows for operation of the field device with an operation tool, comprising:
receiving a first user interface description file in a first user interface description language at an input interface (301);
converting the user interface description file into a second user interface description language by an interpretation device (303) in real time and depending on the selection of a target platform from a plurality of target platforms, wherein the target platforms define corresponding operation tool technologies;
providing the user interface description file in the second user interface description language at an output interface (302).

14. A computer-readable storage medium in which a program for interpreting a user interface description file is stored, which program, when executed on a processor, carries out the method according to claim 13.

15. A program element for interpreting a user interface description file, which program element, when executed on a processor, carries out the method according to claim 13.

## Revendications

1. Un dispositif (100) destiné à générer une configuration d'interface utilisateur pour au moins un appareil de champ, la configuration d'interface utilisateur permettant une commande de l'appareil de champ par un outil de commande, le dispositif (100) comprenant :
une banque de données unique (102) ;
au moins un système de génération d'interface utilisateur (104, 105) ;
la banque de données (102) étant conçue pour mémoriser une multiplicité de données d'appareil pour le au moins un appareil de champ ;
au moins un dispositif d'échantillonnage conçu pour sélectionner une plateforme cible parmi la multiplicité de plateformes cibles, une sélection appropriée de la banque de données de données d'appareil s'effectuant par cette sélection, lesquelles données correspondent à la plateforme cible sélectionnée, les plateformes cibles définissant des technologies respectives d'outil de commande ;
le au moins un système de génération d'interface utilisateur (104, 105) étant conçu pour générer, en fonction des données d'appareil sélectionnées, un fichier de description d'interface utilisateur, associé à le au moins un appareil de champ, dans au moins un langage de description d'interface utilisateur prédéfinissable ;
le au moins un langage de description d'interface utilisateur prédéfinissable pouvant être sélectionné parmi au moins deux langages de description d'interface utilisateur différents, en fonction de la plateforme cible sélectionnée.

2. Dispositif (100) selon la revendication 1, comprenant en outre :
un dispositif d'introduction (101) ;
le dispositif d'introduction (101) étant relié à la banque de données (102) ;
le dispositif d'introduction (101) étant conçu pour permettre l'introduction de la multiplicité de données d'appareil pour le au moins un appareil de champ.

3. Dispositif (100) selon la revendication 2, le dispositif d'introduction (101) présentant une gestion des droits d'utilisateurs.

4. Dispositif (100) selon l'une des revendications 1 à 3, le au moins un système de génération d'interface utilisateur (104, 105) présentant une gestion des droits d'utilisateurs.

5. Dispositif (100) selon l'une des revendications 1 à 4, comprenant en outre :
une interface réseau (103, 108, 109) ;
l'interface réseau étant conçue pour l'accès à la bande de données à travers un réseau.

6. Un dispositif (300) pour l'interprétation d'un fichier de description d'interface utilisateur, le fichier de description d'interface utilisateur permettant une commande d'un appareil de champ par un outil de commande, comprenant :
une interface d'introduction (301) ;
un dispositif d'interprétation (303) ;
une interface de sortie (302) ;
l'interface d'introduction (301) étant conçue pour recevoir le fichier de description d'interface utilisateur dans un premier langage de description d'interface utilisateur ;
le dispositif d'interprétation (303) étant conçu pour convertir le fichier de description d'interface utilisateur, en temps réel et en fonction d'une sélection d'une plateforme cible parmi une multiplicité de plateformes cibles, en un second langage de description d'interface utilisateur, les plateformes cibles définissant des technologies respectives d'outil de commande ; et
le dispositif d'interprétation (303) étant conçu pour fournir à l'interface de sortie (302) le fichier de description d'interface utilisateur dans le second langage de description d'interface utilisateur.

7. Dispositif (300) selon la revendication 6, l'interface d'introduction (301) étant conçue pour recevoir un fichier de configuration d'interface utilisateur, qui a été généré par le dispositif (100) destiné à la génération d'une configuration d'interface utilisateur selon l'une des revendications 1 à 5.

8. Dispositif (300) selon l'une des revendications 6 et 7, le premier langage de description d'interface utilisateur étant un langage de description textuelle.

9. Dispositif selon l'une des revendications 6 et 7, le premier langage de description d'interface utilisateur étant XML.

10. Un procédé destiné à la génération d'une configuration d'interface utilisateur pour au moins un appareil de champ, la configuration d'interface utilisateur permettant une commande de l'appareil de champ par un outil de commande, le procédé comprenant :
la sélection de le au moins un appareil de champ ;
la sélection d'une plateforme cible parmi une multiplicité de plateformes cibles, un échantillonnage approprié de données d'appareil d'une banque de données unique s'effectuant par cette sélection, les données d'appareil sélectionnés correspondant à la plateforme cible sélectionnée, les plateformes cibles définissant des technologies respectives d'outil de commande ;
la sélection d'au moins un langage de description d'interface utilisateur en fonction de la plateforme cible sélectionnée ;
la génération d'un fichier de description d'interface utilisateur, associé à le au moins un appareil de champ, dans le au moins un langage de description d'interface utilisateur à partir des données d'appareil sélectionnées ;
le au moins un langage de description d'interface utilisateur pouvant être sélectionné, en fonction de la plateforme cible choisie, parmi au moins deux langages de description d'interface utilisateur différents.

11. Un support d'information lisible par ordinateur, dans lequel est mémorisé un programme destiné à générer une configuration d'interface utilisateur pour au moins un appareil de champ, lequel programme, lorsqu'il est réalisé par un processeur, exécute le procédé selon la revendication 10.

12. Un élément de programme, destiné à générer une configuration d'interface utilisateur pour au moins un appareil de champ, lequel élément de programme, lorsqu'il est réalisé par un processeur, exécute le procédé selon la revendication 10.

13. Un procédé destiné à l'interprétation d'un fichier de description d'interface utilisateur, le fichier de description d'interface utilisateur permettant une commande d'un appareil de champ par un outil de commande, comprenant :
la réception, sur une interface d'introduction (301), d'un premier fichier de description d'interface utilisateur dans un premier langage de description d'interface utilisateur ;
la conversion, en temps réel et en fonction d'une sélection d'une plateforme cible parmi une multiplicité de plateformes cibles, du fichier de description d'interface utilisateur dans un second langage de description d'interface utilisateur au moyen d'un dispositif d'interprétation (303), les plateformes cibles définissant des technologies respectives d'outil de commande ;
la transmission à une interface de sortie (302) du fichier de description d'interface utilisateur dans le second langage de description d'interface utilisateur.

14. Support d'information lisible par ordinateur, dans lequel est mémorisé un programme destiné à l'interprétation d'un fichier de description d'interface utilisateur, lequel programme, lorsqu'il est réalisé par un processeur, exécute le procédé selon la revendication 13.

15. Un élément de programme, destiné à l'interprétation d'un fichier de description d'interface utilisateur, lequel élément de programme, lorsqu'il est réalisé par un processeur, exécute le procédé selon la revendication 13.
